# EUROPEAN PATENT APPLICATION

(11) **EP 3 889 052 A1**
(43) Date of publication of application: **06.10.2021**
(21) Application number: 20748770.3
(22) Date of filing: 25.02.2020
(51) Int. Cl.: B64F 1/02

(54) **UNMANNED AERIAL VEHICLE RECOVERY APPARATUS**

(30) Priority: 31.01.2019 CN 201910095275
(71) Applicant: Qihang Launching Tech Co., Ltd., Qingdao, Shandong 266000 (CN)
(72) Inventor: BI, Hejun, Qingdao, Shandong 266000 (CN)
(74) Representative: Spittle, Mark Charles
(86) International application number: PCT/CN2020/076613
(87) International publication number: WO 2020/156587

(57) **Abstract**

Disclosed is a recovery device for unmanned aerial vehicles including a recovery pulley, a pulley rail and a damper, wherein the recovery pulley is used to be coupled for recovering unmanned aerial vehicles, and the pulley rail is used to carry the recovery pulley; the recovery pulley is connected to the pulley rail by rollers, and the damper is connected to the recovery pulley for generating a damping force for a linear movement of the recovery pulley. The recovery device for unmanned aerial vehicles of the present invention can be adapted to recover all types of aerial vehicles, has a simple structure, is easy to manufacture and has a low cost. Through the cooperation of the pulley rail, the recovery pulley and the damper, the recovery of the unmanned aerial vehicles of various weights can be performed. Through the foldable and retractable pulley rail, the recovery device is highly mobile. The present invention can have a wide range of application, and can be applied for comprehensive recovery in ships, vehicles, onboard situations, islands, forests and buildings.

## Description

### Field of the invention

The present invention relates to the field of unmanned aerial vehicles, in particular, to a recovery device for unmanned aerial vehicles.

### Background

For the practical application of small and medium-sized fixed-wing unmanned aerial vehicles, the recovery system is an important guarantee for the unmanned aerial vehicles to be put into use again, continuously and efficiently. The existing recovery techniques for the unmanned aerial vehicles typically include recovery by wheeled take-off launcher, recovery by air drop launcher, parachute recovery, air rope recovery, net recovery, etc., but all of these have certain limitations: for the recovery by wheeled take-off launcher, it is a common recovery method, which requires a runway of a certain length and width, and cannot perform recovery at anytime and anywhere; for the recovery by air drop launcher, specialized recovery aerial vehicles are required, which brings low efficiency, high cost, high risk and complicated operations, resulting in lack of practicability; for the parachute recovery, it has better practicability, but accurate landing sites cannot be ensured and the aerial vehicle is prone to damage, while there is a certain risk for the recovery during war and on the sea; for the rope recovery, it is relatively flexible and easy to operate as well as being suitable for the case of land and ships. For example, the patent CN202642096U disclosed a small unmanned aerial vehicle, an air bone arresting device, a land arresting device and an arresting system therefor, wherein the air bone arresting device includes an arresting hook and a release device; the arresting hook has one end used to be rotatably connected to the main body of the small unmanned aerial vehicle and the other end used to be connected to the release device; the release device is fixed on the body of the small unmanned aerial vehicle for fixing or releasing the arresting hook according the received external control signals, so that the landing recovery may be achieved without a runway for landing. However, since the parafoil rope is used, there is a limitation on the body weight and structural strength of the aerial vehicle. At present, the air rope recovery is only used for a slight aerial vehicle with a total recovery weight of less than 50 kilograms.

The net recovery is usually used for recovery the unmanned aerial vehicle on ships. For example, the patent CN106394922A disclosed a safe landing method for aircraft and a device therefor, wherein a landing vehicle is used so that the speed and the kinetic energy of the aircraft reduces to zero in short time, which solves the problem in safe landing due to the failure of the undercarriage for the aircraft; the landing vehicle includes a frame, a plurality of groups of rollers, a block plate A, a buffer mat A, a platform, a plurality of rows of arresting devices, and a control chamber; the plurality of buffer mats A stacked and connected with each other in sequence are mounted on the block plate A; the airport control center controls the landing vehicle, and the landing speed, angle and orientation of the aircraft that was forced to land due to a malfunction, reduces the speed of the landing vehicle gradually, while the top rod raising and the platform rotating around the shaft to change the angle α of the platform from zero to a certain degree gradually, so that the aircraft reduces the speed while the aircraft head and body or other parts and the buffer mat A deforming, wherein the buffer mat A is covered on the surface of the aircraft to further increase the resistance, the aircraft speed is reduced to zero, and the aircraft lands safely, thereby eliminating or reducing the damage on the aircraft and the personnel on the aircraft. However, due to space constraints on the ship's deck, the net rope for arresting may buffer for a short distance, which lacks auxiliary measures, poor control ability, and the aircraft may be subjected to large overload when colliding the net, and further may roll uncontrollably to damage the body and the ship, even resulting in accidents, having a higher risk.

With the rapid development of the practical application of the unmanned aerial vehicles, the application field of fixed-wing unmanned aerial vehicles urgently needs a recovery system that can be generally adapted to various models, various sites, environment, conditions, and is easy to maneuver.

### Summary

To achieve above drawbacks in the prior art, the present invention provides a novel recovery device for unmanned aerial vehicles.

The technical solution of the present invention is as follows:
A recovery device for unmanned aerial vehicles including a recovery pulley, a pulley rail and a damper, wherein the recovery pulley is used to be coupled for recovering unmanned aerial vehicles, and includes a frame, rollers, a cable support frame, a net bed, an arresting cable and an arresting cable rocker; the pulley rail is used to carry the recovery pulley, and the recovery pulley is connected to the pulley rail by the rollers; the damper is connected to the recovery pulley for generating a damping force for a linear movement of the recovery pulley.

The net bed is arranged at a front portion of the frame of the recovery pulley, and includes side cables arranged along both sides of the frame, forward-distributed vertical cables and rib-distributed longitudinal cables to constitute a crisscrossed net pattern; the net bed is connected to the cable support frame on the frame by front and rear ends of cables at both sides, and the net bed is isolated from the frame by the cable support frame.

The net bed is made of material with soft, wear-resistant, impact-resistant and resilient properties, preferably a high-strength fiber rope.

The arresting cable rocker consists of symmetrical left and right rockers, and lower portions of the left and right rockers are hinged axially with each other and mounted on left and right sides of a rear portion of the frame respectively.

Both ends of the arresting cable is connected to the left and right arresting cable rockers or the frame by upper portions of the left and right arresting cable rockers, and both ends of the arresting cable have an elastic damping telescopic function.

The damper has a damping force adapted to a weight and a speed of the aerial vehicle and a length of the pulley rail, the recovery pulley is connected to the damper by traction cables and reverse rollers, and an end of the pulley rail is provided with the reverse rollers for carrying the traction cables.

A lower portion of a body of the unmanned aerial vehicle is provided with a self-locking hook, and a rear portion of the body of the unmanned aerial vehicle is provided with a tail hook; the tail hook is used to be hung with the arresting cable, and the self-locking hook is used to be hung with and lock the net bed after the body descends and touches the net.

A tail portion of the unmanned aerial vehicle is provided with hanging ropes, the net bed is provided with an arresting rockers, the arresting rockers are provided with hanging hooks, and the hanging ropes drooped from the aerial vehicle is hung to the hanging hooks on upper portions of the arresting rockers.

The hanging ropes are arranged at a root portion, a rear portion or a tail brace of a wing, connected from left to right horizontally or by a lengthened rod, and drooped through left and right lengthened rods or through double tail hooks, which means that two tail hooks are arranged at left and right sides and the ropes are tied at ends of the left and right tail hooks to put down the hanging ropes through the tail hooks.

Ends of the arresting cable rocker are provided with the hanging hooks, and the hanging hooks are used to be hung with the drooped ropes. In case of the recovery of the hanging ropes, the arresting cable rocker may be simplified into a single arm, and centered.

The hanging hooks is connected to the arresting cable rockers through an elastic damping device.

The recovery device for unmanned aerial vehicles further includes heightened side cables, and heights of the heightened side cables are adapted to a height difference of the wing of the aerial vehicle and the lower portion of the body.

The net bed is provided with reserved spaces.

A recovery device for unmanned aerial vehicles includes a recovery pulley, a pulley rail and a damper, wherein the recovery pulley is used to be coupled for recovering unmanned aerial vehicles, and includes a frame, rollers, a cable support frame, a net bed, and a vertical net; the pulley rail is used to carry the recovery pulley, and the recovery pulley is connected to the pulley rail by the rollers; the damper is connected to the recovery pulley for generating a damping force for a linear movement of the recovery pulley; the vertical net is arranged at a front portion of the recovery pulley, the vertical net is constituted by supporting the side cables with the cable support frame, the vertical net is isolated and suspended from the frame through the cable support frame, and the connected composition of the side cables, the horizontal cables and the vertical cables is adapted to the body of the aerial vehicle to be recovered.

A recovery method for unmanned aerial vehicles for the recovery device for unmanned aerial vehicles includes steps of:
S1: before hanging cables to the unmanned aerial vehicle: advancing the unmanned aerial vehicle axially along the rail from the rear portion of the pulley rail (2) and flying the unmanned aerial vehicle aiming at a middle position of the arresting cable (8) by manipulating and guiding when performing arresting and recovery operations, wherein a height of a flight path is controlled within a range such that the tail hook is adapted to the arresting cable (8) or the hanging rope drooped from the aerial vehicle is adapted to the hanging hook of the upper portion of the arresting rocker;
S2: after hanging the cables to the unmanned aerial vehicle: the unmanned aerial vehicle advancing into an arresting position, the tail hook hanging to the arresting cable (8), or the hanging rope drooped from the aerial vehicle hanging to the hanging hook of the upper portion of the arresting rocker; pulling out the arresting cable (8), the arresting cable rocker (9) tilting forwardly, the arresting cable (8) pulling the unmanned aerial vehicle to decelerate initially through the action of the elastic damper of both ends, and pulling the recovery pulley (1) to move forwardly along the rail while the damper (3) generating resistance for the movement of the recovery pulley (1);
S3: a locking stage after the unmanned aerial vehicle touches the net: the unmanned aerial vehicle pulling the arresting cable (8) to further pull the recovery pulley (1) to continue moving forwardly, the unmanned aerial vehicle decelerating and descending under the action of system inertia and the damper (3), the lower portion of the body touching the net bed (7), and hanging and locking the body to the horizontal cables of the net bed (7) by the self-locking hook; then, through the connection and fixation between the self-locking hook and the net bed (7), the tail hook and the arresting cable (8) or the self-locking hook and the net bed (7) and the hook of the arresting cable rocker, the unmanned aerial vehicle on the net bed (7) moving in sync with the recovery pulley (1), and the recovery pulley (1) continuing to decelerate through the action of the traction cable with the damper (3);
S4: a stopping stage of the pulley for the unmanned aerial vehicle: after decelerating for a distance on the pulley rail (2), the recovery pulley (1) losing the inertial and stopping forward movement finally, then the recovery operations of the unmanned aerial vehicle finishing.

During the arresting and recovery operations, if a route of the unmanned aerial vehicle is too high or there is an excessive left and right deviation, the tail hook may not be hung to the arresting cable (8) or the hanging rope may not be hung to the hanging hook of the upper portion of the arresting rocker, the unmanned aerial vehicle re-flies and further a next round of arresting and recovery operations is performed.

If the tail hook of the unmanned aerial vehicle misses the arresting cable (8) or the hanging rope misses the hanging hook of the upper portion of the arresting rocker, the recovery operations may be performed again only by re-flying.

Compared with the prior art, the present invention has the following beneficial effects: the recovery device for unmanned aerial vehicles of the present invention can be adapted to recover all types of aerial vehicles, has a simple structure, is easy to manufacture and has a low cost. Through the cooperation of the pulley rail, the recovery pulley and the damper, the recovery of the unmanned aerial vehicles of various weights can be performed; by using foldable and retractable pulley rail, the recovery device has highly mobility; the present invention can have a wide range of application, and can be applied for comprehensive recovery in ships, vehicles, onboard situations, islands, forests and building blocks.

### Details of drawings

Fig. 1 is a structural schematic diagram of a recovery pulley of the present invention;
Fig. 2 is a schematic diagram of a net bed of a recovery device for an aerial vehicle with slightly-drooped wings;
Fig. 3 is a schematic diagram of a net bed of a recovery device for an aerial vehicle with single upper wings;
Fig. 4 is a schematic diagram of a net bed of a recovery device for an aerial vehicle with air bone equipment;
Fig. 5 is a schematic diagram of a recovery pulley with vertical-net-typed net bed of the present invention;
Fig. 6 is a schematic structural diagram of an unmanned aerial vehicle before being hung to cables of the present invention;
Fig. 7 is a schematic structural diagram of an unmanned aerial vehicle after being hung to cables of the present invention;
Fig. 8 is a schematic structural diagram of an aerial vehicle when being touched the net and locked of the present invention;
Fig. 9 is a schematic structural diagram of an aerial vehicle when the pulley stops of the present invention;

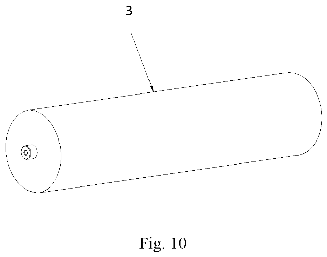

Fig. 10 is a schematic structural diagram of a damper of the present invention;
Fig. 11 is a schematic structural diagram of a pulley rail of the present invention;
Fig. 12 is a schematic structural diagram of a self-locking hook of the present invention;
Fig. 13 is a schematic structural diagram of a tail hook of the present invention; and
Fig. 14 is a schematic structural diagram of a tail hook frame of the present invention.

### Detailed Description of the Invention

The disclosure will be further described in combination with drawings and embodiments. It should be understood that the specific embodiments described herein are only for illustrating but not for limiting the present invention.

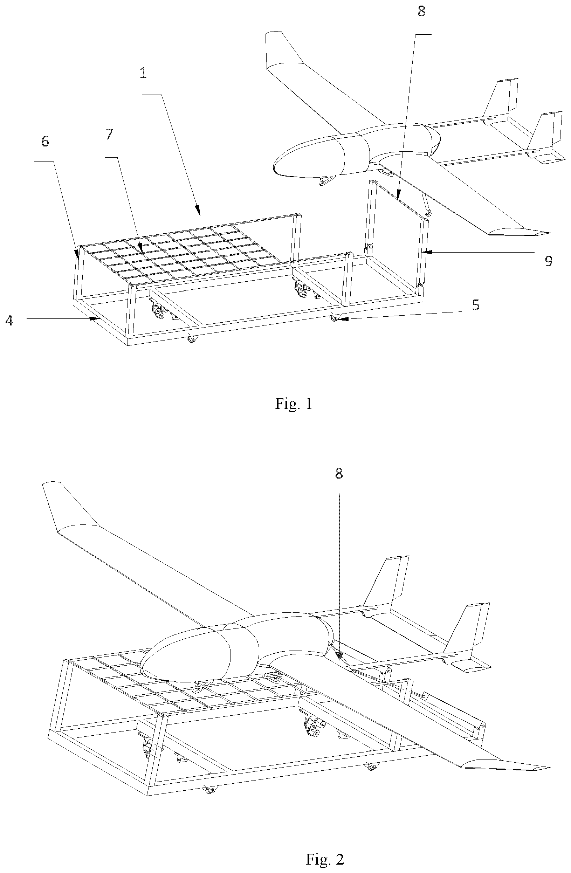

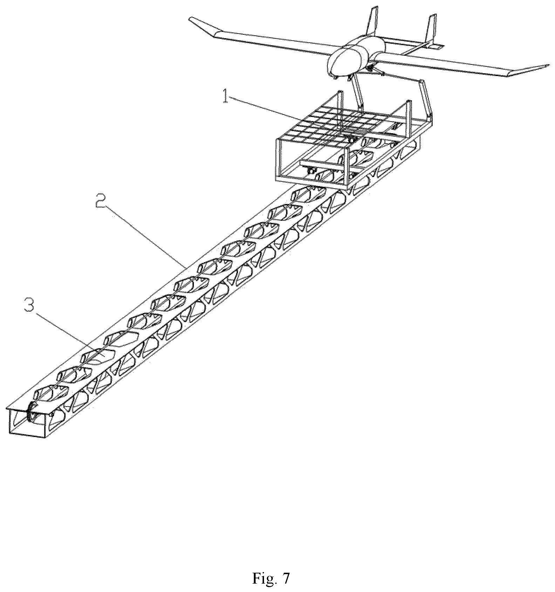

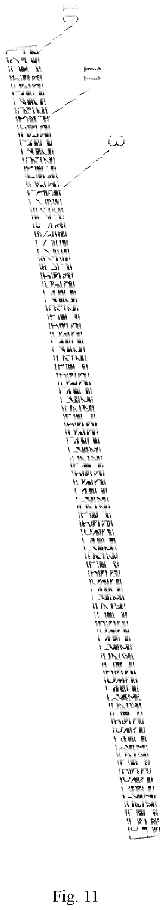

With reference to Figs. 1 and 7, a recovery device for unmanned aerial vehicles of the present invention consists of a recovery pulley 1, a pulley rail 2 and a damper 3, wherein the recovery pulley is used to be coupled for recovering unmanned aerial vehicles, and includes a frame 4, rollers 5, a cable support frame 6, a net bed 7, an arresting cable 8 and an arresting cable rocker 9. The pulley rail 2, as a straight rail with a certain length and stiffness, is used to carry the recovery pulley 1, and the recovery pulley is connected to the pulley rail 2 by the rollers 5 and move linearly along a long axial direction of the rail, an end of the pulley rail being provided with reverse rollers 10 for carrying a traction cable 11, as shown in Fig. 11; the damper 3 is connected to the recovery pulley for generating a damping force for a linear movement of the recovery pulley so that the recovery pulley decelerates and finally stops under the action of the damping force.

The net bed is arranged at a front portion of the frame of the recovery pulley, and includes side cables arranged along both sides of the frame, forward-distributed vertical cables and rib-distributed longitudinal cables to constitute a crisscrossed net pattern. The net bed is connected to the cable support frame on the frame by front and rear ends of side cables at both sides, and the net bed is isolated and suspended from the frame by the cable support frame. The net bed is made of a material with soft, wear-resistant, impact-resistant and resilient properties, preferably a high-strength fiber rope. In the present invention, the isolated and suspended net bed and vertical nets are formed by the cable support frame with the soft, high-strength fiber rope, which may not only support and lock the aerial vehicle effectively, but also may ensure that the aerial vehicle may be prevented from rigid shock during the process of deceleration and touching the net.

The arresting cable rocker consists of two symmetrical left and right rockers, and lower portions of the left and right rockers are hinged axially with each other and mounted on left and right sides of a rear portion of the frame respectively. The left and right rockers are operated to be tilted forward and erected upward, wherein the left and right rockers tilts forward when being subjected to a force and automatically erects to reset after the force disappears; after the left and right rockers erects to reset, the upper portion of the rocker is higher than the net bed. Both ends of the arresting cable is connected to the left and right arresting cable rockers or the frame by upper portions of the left and right arresting cable rockers, and both ends of the arresting cable have an elastic damping telescopic function. When being not subj ected to the force, the arresting cable is straightened; when being subjected to the force, both ends may be lengthened; when the force disappears, the arresting cable retracts to both ends under the elastic action to be in a straightened state.

In the present invention, through the elevated arresting cable, it is ensured that the tail hook of the aerial vehicle may not cross the arresting cable to connect directly to the net bed in case of the failure in arresting and recovery operations. When the arresting cable rocker tilts forward under the force, the arresting cable and the arresting cable rocker may be prevented from interfering with the tail and flat tail of the aerial vehicle, and the propeller of the rear portion of the waist-push and tail-push types of aerial vehicle.

Optionally, a tail portion of the aerial vehicle may be provided with a tail hook, and the net bed is provided with an arresting cable rocker and an arresting cable; or, a tail portion of the unmanned aerial vehicle is provided with hanging ropes, the net bed is provided with an arresting rockers, the arresting rockers are provided with hanging hooks, and the hanging ropes drooped from the aerial vehicle is hung to the hanging hooks on upper portions of the arresting rockers. The hanging ropes are arranged at a root portion, a rear portion or a tail brace of a wing, connected from left to right horizontally or by a lengthened rod, and drooped through left and right lengthened rods or through double tail hooks, which means that two tail hooks are arranged at left and right sides and the ropes are tied at ends of the left and right tail hooks to put down the hanging ropes through the tail hooks. Ends of the arresting cable rocker are provided with the hanging hooks, and the hanging hooks are used to be hung with the drooped ropes. Preferably, the hanging hooks is connected to the arresting cable rockers through an elastic damping device. When the aerial vehicle is hung to the hanging ropes, the damping effect of the hanging hooks may reduce the axial overload and act as a buffer. In case of the recovery of the hanging ropes, the arresting cable rocker may be simplified into a single arm, and centered.

The recovery pulley is connected to the pulley rail by rollers provided on the frame, and the pulley rail limits the pulley to make a linear movement axially along the rail. The damper has a damping force adapted to a weight and a speed of the aerial vehicle and a length of the pulley rail to block the linear movement of the recovery pulley along the pulley rail, so that the recovery pulley decelerates continuously, and stops within an effective length of the rail. The damper may be selected from various types such as a hydraulic damper, an air pressure damper, a water turbine damper or an electromagnetic damper. The recovery pulley is connected to the damper. Preferably, the recovery pulley is connected to the damper by traction cables, reverse rollers and the damper; the damper drags the recovery pulley to decelerate and stop by the traction cables; the traction cables are further used to reset the recovery pulley. In the present invention, through the cooperation of the rail and the damper, recovery operations for the unmanned aerial vehicle may be performed with low overload; taking a pulley rail with an effective deceleration length of ten meters and the damper matched therewith, it is ensured that the aerial vehicle that lands at a relative speed of 140 km/h may be recovered at an overload of less than 10g.

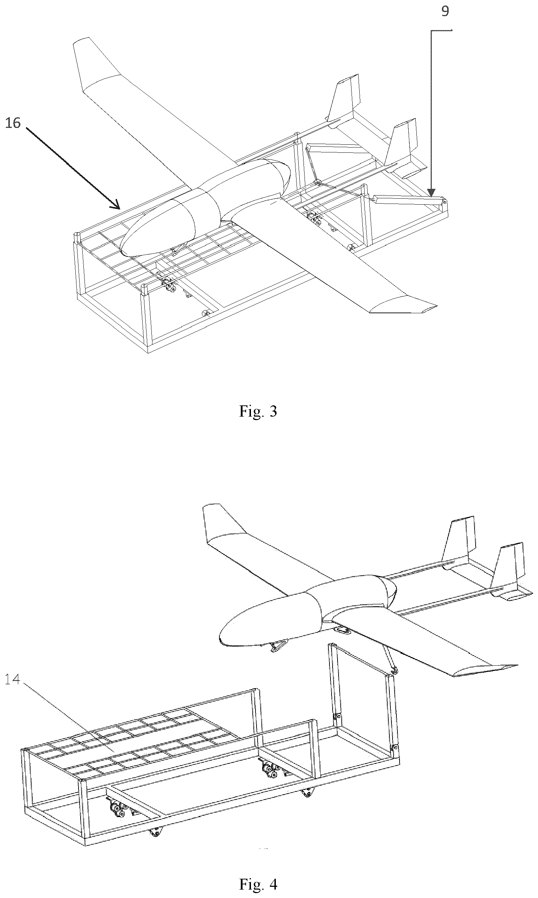

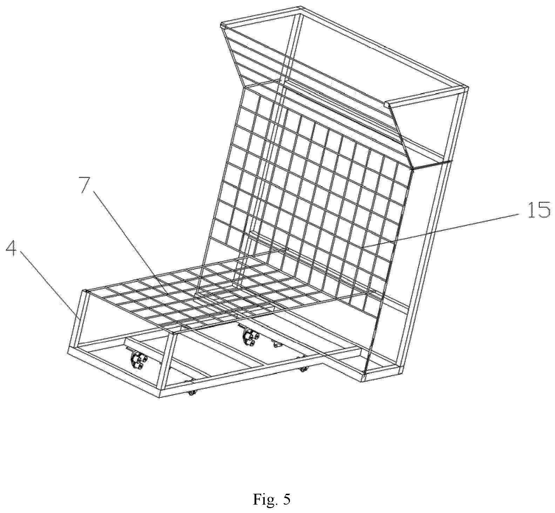

For different types of aerial vehicles, the present invention has different embodiments as follows:
For those types with slightly-drooped wings, through the constriction of the horizontal cables, the vertical cables and the arresting cables, the net bed of a single layer of side cables may prevent the aerial vehicle from rolling horizontally and rolling back and forth after the aerial vehicle touches the net effectively, as shown in Fig. 2.
For those types with slightly-raised wings, heightened side cables 16 may be added, and heights of the heightened side cables are adapted to a height difference of the wing of the aerial vehicle and the lower portion of the body, wherein the added heightened side cables are used to support the wings on both sides; then, by locking the self-locking hook with the horizontal cables and the constriction of the heightened side cables of both sides and the arresting cables, the aerial vehicle may be prevented from rolling horizontally and rolling back and forth after the aerial vehicle touches the net effectively, as shown in Fig. 3.
For those types with air bone equipment attached to the lower portion, since the lower portion of the body has outer loads or protrusions such as photo charge loads, sub-tanks and combat portions, the corresponding portions on the net bed may be provided with reserved spaces 14 to prevent the effects on the self-locking hook hanging to the net and the equipment and body from being damaged due to scratch when the body touches the net, as shown in Fig. 4.
For those types of unmanned aerial vehicles that may not be provided with the tail hook or other specific types, the arresting cables and the arresting cable rockers may not omitted, and a vertical net 15 may be arranged in the front portion of the recovery pulley, then the aerial vehicle is guided and manipulated to aim at the vertical net axially from the rear portion along the pulley rail and the front portion of the body of the aerial vehicle collides the net directly while locking the self-locking hook arranged on the body with the vertical net, so that secure and stable recovery of the unmanned aerial vehicle may be achieved through the damping deceleration and stopping of the recovery pulley on the pulley rail and the support of the aerial vehicle with the net bed. The vertical net is also constituted by supporting the side cables with the cable support frame, the vertical net is isolated and suspended from the frame through the cable support frame, and the connected composition of the side cables, the horizontal cables and the vertical cables is adapted to the body of the aerial vehicle to be recovered, as shown in Fig. 5.

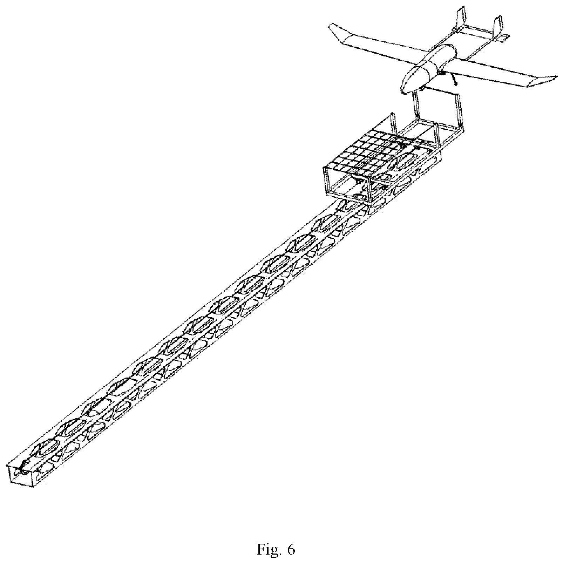

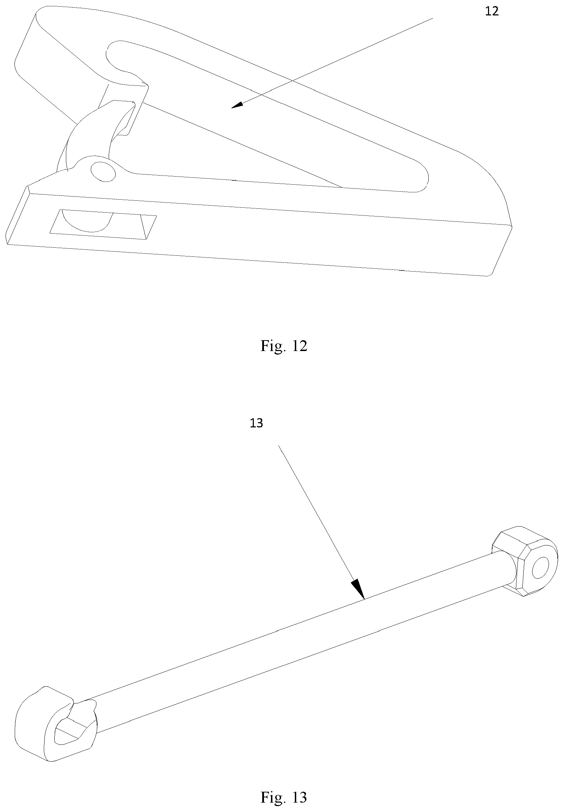

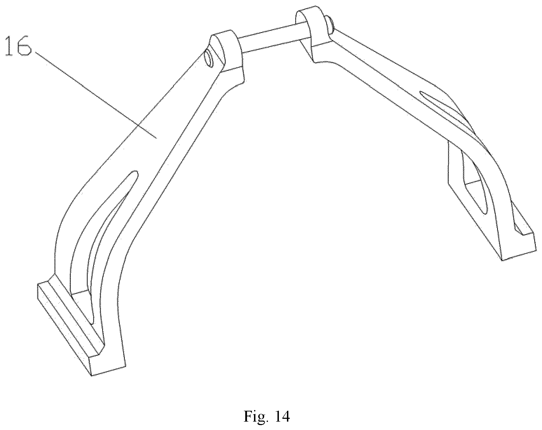

An embodiment of recovering the unmanned aerial vehicle with the recovery device of the present invention is as follows:
In the present invention, the unmanned aerial vehicle to be recovered is not equipped with an undercarriage, the self-locking hook 12 is required to be arranged on the lower portion of the body, and a tail hook support 16 and the tail hook 13 is arranged in the rear portion of the body, as shown in Figs. 12 to 14. The tail hook is used to be hung to the arresting cable, and the tail hook support is used to mount and support the tail hook, so as to prevent the action of the tail hook interfering with the propeller of the rear portion. The self-locking hook 12 is used to be hung to and lock the net bed after the body descends and touches the net. The recovery pulley supports the side cables on both sides by the cable support frame on the frame. The horizontal cables are connected, fixed and tightened to the side cables. Both ends of the vertical cables between the side cables are connected to the horizontal cables, and the horizontal cables and the vertical cables form a mesh shape. The horizontal cables are used to be coupled to the self-locking hook of the lower portion of the body of the unmanned aerial vehicle, and the vertical cables are used to limit the unmanned aerial vehicle from moving to both sides after the aerial vehicle touches the net. Before the arresting and recovery operations are performed, and the recovery pulley is in an initial position on the pulley rail, the arresting cable rocker is erected, so as to ensure that the arresting cable is tightened and is seated on a highest position;
the unmanned aerial vehicle is advanced axially along the rail from the rear portion of the pulley rail, and the unmanned aerial vehicle flies while aiming at a middle position of the arresting cable by manipulating and guiding when arresting and recovery operations are performed, wherein a height of a flight path is controlled within a range such that the tail hook is adapted to the arresting cable, as shown in Fig. 6.

The unmanned aerial vehicle advances into an arresting position, the tail hook hangs to the arresting cable, the arresting cable is pulled out, and the arresting cable rocker tilts forward, so that the arresting cable pulls the unmanned aerial vehicle to decelerate initially through the action of the elastic damper of both ends, and pulls the recovery pulley to move forward along the rail while the damper generating resistance for the movement of the recovery pulley, as shown in Fig. 7.

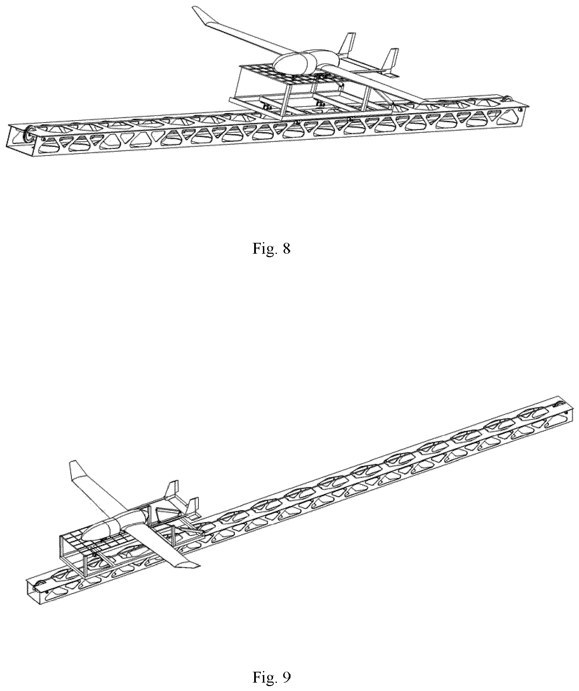

The unmanned aerial vehicle pulling the arresting cable to further pull the recovery pulley to continue moving forward, the unmanned aerial vehicle decelerates and descends under the action of system inertia and the damper, and the lower portion of the body touches the net bed and hangs and locks the body to the horizontal cables of the net bed by the self-locking hook. Then, through the connection and fixation between the self-locking hook and the net bed (7), the tail hook and the arresting cable or the self-locking hook and the net bed and the hook of the arresting cable rocker, the unmanned aerial vehicle on the net bed moves in sync with the recovery pulley, and the recovery pulley continues to decelerate through the action of the traction cable with the damper, as shown in Fig. 8.

After decelerating for a distance on the pulley rail, the recovery pulley loses the inertial and stops forward movement finally, then the recovery operations of the unmanned aerial vehicle finishes, as shown in Fig. 9.

During the arresting and recovery operations, if a route of the unmanned aerial vehicle is too high or there is an excessive left and right deviation, the tail hook may not be hung to the arresting cable, the unmanned aerial vehicle re-flies and further a next round of arresting and recovery operations is performed. The tail hook of the unmanned aerial vehicle is designed to have a certain drooped length, and the net bed is lower than the arresting cable while having a certain height different between the net bed and the arresting cable, so that the recovery operations may be performed only by re-flying the aerial vehicle if the tail hook of the unmanned aerial vehicle misses the arresting cable except the case that the route was too low and too late to correct because the aerial vehicle loses control, thereby not generating any damages on the unmanned aerial vehicle and the arresting and recovery system.

In particular, the recovery pulley with a combination of the net bed and the vertical net is also suitable for the recovery of the air base; in other words, the unmanned aerial vehicle is recovered in the air by a mother aerial vehicle. In this embodiment, the pulley rail is arranged at a tail of the mother aerial vehicle axially, and mounted and fixed by bottom plates or top plates inside the cabin of the mother aerial vehicle. During the recovery operations, a tail gate of the cabin of the mother aerial vehicle is opened, the unmanned aerial vehicle is controlled to advance towards the tail of the mother aerial vehicle, then the unmanned aerial vehicle is controlled and guided to aim at the vertical net of the recovery pulley for colliding the net and the unmanned aerial vehicle enters the cabin of the mother aerial vehicle along the pulley rail from the tail together with the recovery pulley after touching the net and locking; after continuous deceleration, the aerial vehicle stops on the pulley rail finally, and after the unmanned aerial vehicle is removed, the recovery pulley is reset for the next round of recovery operations.

The recovery device for unmanned aerial vehicles of the present invention can be adapted to recover all types of aerial vehicles, has a simple structure, is easy to manufacture and has a low cost. Through the cooperation of the pulley rail, the recovery pulley and the damper, the recovery of the unmanned aerial vehicles of various weights can be performed; through the foldable and retractable pulley rail, the recovery device is highly mobile; the present invention can have a wide range of application, and can be applied for comprehensive recovery in ships, vehicles, onboard situations, islands, forests and buildings. The technical solutions of the device overcome the defects of the prior art, and promotes the industry to a new stage of technology, which is of great significance to the technological innovation in the field of recovery of the unmanned aerial vehicles.

The above descriptions indicate and describe the preferred embodiments of the present invention. As mentioned above, it should be understood that the present invention is not limited to the form disclosed herein and should not be regarded as an exclusion of other embodiments, and may be used for a variety of other combinations, modifications and environments, and may be modified within the scope of the invention concept described herein through the above-mentioned teaching or related fields of technology or knowledge. Modifications and changes made by those skilled in the art shall not be departed from the spirit and scope of the present invention, and shall be within the scope of protection of the claims attached to the present invention.

## Claims

1. A recovery device for unmanned aerial vehicles, comprising a recovery pulley (1), a pulley rail (2) and a damper (3), wherein the recovery pulley (1) is used to be coupled for recovering unmanned aerial vehicles, and comprises a frame (4), rollers (5), a cable support frame (6), a net bed (7), an arresting cable (8) and an arresting cable rocker (9); the pulley rail (2) is used to carry the recovery pulley (1), and the recovery pulley (1) is connected to the pulley rail (2) by the rollers (5); the damper (3) is connected to the recovery pulley (1) for generating a damping force for a linear movement of the recovery pulley (1).

2. The recovery device for unmanned aerial vehicles according to claim 1, wherein the net bed (7) is arranged at a front portion of the frame (4) of the recovery pulley (1), and the net bed (7) comprises side cables arranged along both sides of the frame (4), forward-distributed vertical cables and rib-distributed longitudinal cables to constitute a crisscrossed net pattern; the net bed (7) is connected to the cable support frame (6) on the frame (4) by front and rear ends of side cables at both sides, and the net bed (7) is isolated from the frame (4) by the cable support frame (6).

3. The recovery device for unmanned aerial vehicles according to claim 1 or 2, wherein the net bed (7) is made of a material with soft, wear-resistant, impact-resistant and resilient properties, preferably a high-strength fiber rope.

4. The recovery device for unmanned aerial vehicles according to claim 1 or 2, wherein the arresting cable rocker (9) consists of symmetrical left and right rockers, and lower portions of the left and right rockers are hinged axially with each other and mounted on left and right sides of a rear portion of the frame (4) respectively.

5. The recovery device for unmanned aerial vehicles according to claim 5, wherein both ends of the arresting cable (8) is connected to the left and right arresting cable rockers (9) or the frame (4) by upper portions of the left and right arresting cable rockers (9), and both ends of the arresting cable (8) have an elastic damping telescopic function.

6. The recovery device for unmanned aerial vehicles according to claim 1 or 2, wherein the damper (3) has a damping force adapted to a weight and a speed of the aerial vehicle and a length of the pulley rail (2), the recovery pulley (1) is connected to the damper (3) by traction cables and reverse rollers, and an end of the pulley rail (2) is provided with the reverse rollers for carrying the traction cables.

7. The recovery device for unmanned aerial vehicles according to claim 1 or 2, wherein a lower portion of a body of the unmanned aerial vehicle is provided with a self-locking hook, and a rear portion of the body of the unmanned aerial vehicle is provided with a tail hook; the tail hook is used to be hung with the arresting cable (8), and the self-locking hook is used to be hung with and lock the net bed (7) after the body descends and touches the net.

8. The recovery device for unmanned aerial vehicles according to claim 1 or 2, wherein a tail portion of the unmanned aerial vehicle is provided with hanging ropes, the net bed is provided with an arresting rockers, the arresting rockers are provided with hanging hooks, and the hanging ropes drooped from the aerial vehicle is hung to the hanging hooks on upper portions of the arresting rockers.

9. The recovery device for unmanned aerial vehicles according to claim 8, wherein the hanging ropes are arranged at a root portion, a rear portion or a tail brace of a wing, connected from left to right horizontally or by a lengthened rod, and drooped through left and right lengthened rods or through double tail hooks, which means that two tail hooks are arranged at left and right sides and the ropes are tied at ends of the left and right tail hooks to put down the hanging ropes through the tail hooks.

10. The recovery device for unmanned aerial vehicles according to claim 9, wherein ends of the arresting cable are provided with the hanging hooks, and the hanging hooks are used to be hung with the drooped ropes.

11. The recovery device for unmanned aerial vehicles according to claim 10, wherein the hanging hooks is connected to the arresting cable rockers through an elastic damping device.

12. The recovery device for unmanned aerial vehicles according to claim 2, further comprising heightened side cables, and heights of the heightened side cables are adapted to a height difference of the wing of the aerial vehicle and the lower portion of the body.

13. The recovery device for unmanned aerial vehicles according to claim 1 or 2, wherein the net bed (7) is provided with reserved spaces.

14. The recovery device for unmanned aerial vehicles according to claim 1 or 2, wherein the damper is selected from a hydraulic damper, an air pressure damper, a water turbine damper or an electromagnetic damper.

15. A recovery device for unmanned aerial vehicles, comprising a recovery pulley (1), a pulley rail (2) and a damper (3), wherein the recovery pulley (1) is used to be coupled for recovering unmanned aerial vehicles, and comprises a frame (4), rollers (5), a cable support frame (6), a net bed (7), and a vertical net; the pulley rail (2) is used to carry the recovery pulley (1), and the recovery pulley (1) is connected to the pulley rail (2) by the rollers (5); the damper (3) is connected to the recovery pulley (1) for generating a damping force for a linear movement of the recovery pulley (1); the vertical net is arranged at a front portion of the recovery pulley (1), the vertical net is constituted by supporting the side cables with the cable support frame (6), the vertical net is isolated and suspended from the frame (4) through the cable support frame (6), and the connected composition of the side cables, the horizontal cables and the vertical cables is adapted to the body of the aerial vehicle to be recovered.

16. A recovery method for unmanned aerial vehicles for the recovery device for unmanned aerial vehicles according to any one of claims 1 to 15, comprising steps of:
S1: before hanging cables to the unmanned aerial vehicle: advancing the unmanned aerial vehicle axially along the rail from the rear portion of the pulley rail (2) and flying the unmanned aerial vehicle aiming at a middle position of the arresting cable (8) by manipulating and guiding when performing arresting and recovery operations, wherein a height of a flight path is controlled within a range such that the tail hook is adapted to the arresting cable (8) or the hanging rope drooped from the aerial vehicle is adapted to the hanging hook of the upper portion of the arresting rocker;
S2: after hanging the cables to the unmanned aerial vehicle: the unmanned aerial vehicle advancing into an arresting position, the tail hook hanging to the arresting cable (8), or the hanging rope drooped from the aerial vehicle hanging to the hanging hook of the upper portion of the arresting rocker; pulling out the arresting cable (8), the arresting cable rocker (9) tilting forward, the arresting cable (8) pulling the unmanned aerial vehicle to decelerate initially through the action of the elastic damper of both ends, and pulling the recovery pulley (1) to move forward along the rail while the damper (3) generating resistance for the movement of the recovery pulley (1);
S3: a locking stage after the unmanned aerial vehicle touches the net: the unmanned aerial vehicle pulling the arresting cable (8) to further pull the recovery pulley (1) to continue moving forward, the unmanned aerial vehicle decelerating and descending under the action of system inertia and the damper (3), the lower portion of the body touching the net bed (7), and hanging and locking the body to the horizontal cables of the net bed (7) by the self-locking hook; then, through the connection and fixation between the self-locking hook and the net bed (7), the tail hook and the arresting cable (8) or the self-locking hook and the net bed (7) and the hook of the arresting cable rocker, the unmanned aerial vehicle on the net bed (7) moving in sync with the recovery pulley (1), and the recovery pulley (1) continuing to decelerate through the action of the traction cable with the damper (3);
S4: a stopping stage of the pulley for the unmanned aerial vehicle: after decelerating for a distance on the pulley rail (2), the recovery pulley (1) losing the inertial and stopping forward movement finally, then the recovery operations of the unmanned aerial vehicle finishing.

17. The recovery method for unmanned aerial vehicles according to claim 16, wherein during the arresting and recovery operations, if a route of the unmanned aerial vehicle is too high or there is an excessive left and right deviation, the tail hook may not be hung to the arresting cable (8) or the hanging rope may not be hung to the hanging hook of the upper portion of the arresting rocker, the unmanned aerial vehicle re-flies and further a next round of arresting and recovery operations is performed.

18. The recovery method for unmanned aerial vehicles according to claim 16 or 17, wherein if the tail hook of the unmanned aerial vehicle misses the arresting cable (8) or the hanging rope misses the hanging hook of the upper portion of the arresting rocker, the recovery operations may be performed again only by re-flying.
